# EUROPEAN PATENT APPLICATION

(11) **EP 1 528 303 A1**
(43) Date of publication of application: **04.05.2005**
(21) Application number: 04425725.1
(22) Date of filing: 28.09.2004
(51) Int. Cl.: F16K 5/10, F16K 5/12, F16K 5/06, F16K 11/087

(54) **Regulator and mixer ball valve**

(30) Priority: 31.10.2003 IT BS20030109
(71) Applicant: Siral S.p.A., 25065 Lumezzane S.S., (Brescia) (IT)
(72) Inventor: Saleri, Sebastiano, 25065 Lumezzane S.S. (Brescia) (IT); Gallia, Marco, 25065 Lumezzane S.S. (Brescia) (IT)
(74) Representative: Sangiacomo, Fulvia

(57) **Abstract**

The invention concerns a regulator and mixer ball valve which comprises a valve body (20) forming a valve seat (25) housing a ball-shaped member (21) with relative lateral seals. On one side of the valve seat (25) a partition baffle (28) in provides with a differently shaped adjustment opening (29). The partition baffle (28) forms an integral part with the valve body (20) to form a preset flow condition in any opening position of the valve.

## Description

### Field of Invention

This invention concerns in general the field of the valve for fluids, and refers in particular to a ball valve, both two-way and three-way valves, governed by hand or by an electromechanical, pneumatic or hydraulic actuator and suitable specifically for the distribution of a fluid, usually hot or cold water, in heating, conditioning or similar systems, in which a volumetric control of the flow of the fluid is required for correct functioning and/or mixing.

### Prior Art

The ball valves usually include a valve body with at least one input port and one output port for the fluid, a ball-shaped member or core positioned in said body between said input and output ports and held between seals, and a control shaft associated with the ball-shaped member to turn the latter by hand or by means of an actuator, through the closed and open positions of the valve.

In the typical ball valves, the ball-shaped member has an uniform transverse bore that corresponds in diameter to the input and output ports of the valve body. When the valve is fully open, the ports of the body and the ball-shaped member are axially in line, coinciding and enabling the flow of the maximum delivery of fluid. By gradually turning the control shaft from the open position to the valve closed position and vice versa, the area of the bore of the ball-shaped member open to the ports in the valve body is similar to a quarter moon which however varies drastically with each degree of movement of the ball-shaped member. The result is that it becomes rather difficult to adjust the delivery flow of the fluid in the valve when the ball-shaped member is in the intermediate positions between open and closed.

In practice, the conventional ball valves have specific flow and delivery characteristics which do not appear to be ideal for their application in those fluid circulation systems such as heating, conditioning plants etc., which require fine adjustment of the flow of fluid in order to control the efficiency, without defects or waste of energy. In other words, the usual ball valves have scarce or no sensitivity with regard to adjustment of flow and therefore of delivery of the fluid flowing through them and their use in association with any type of control actuator can help change this aspect. ,

Indeed, over the years, ball valves have been subjected to various changes aimed at improving their flow and delivery features and to meet the requirements of the market.

According to one of these changes, the ball-shaped member or core of a ball valve has been equipped with a transverse bore which is not uniform but differently shaped and with varying cross-sections to modulate the flow of fluid passing through in relation to the opening of the valve, that is the degree of rotation of the ball-shaped member between the fully open and closed positions within the sphere of the lateral seals.

According to another change, an insert has been applied in the transverse bore of the ball-shaped member or core of a ball valve which has a convex external surface corresponding to the external surface of the ball and which forms a split or shaped opening whose shape and cross-section is different from that of the transverse bore of the ball member and dimensioned to establish a preset flow condition for each angular position of the ball member itself. The insert can be plastic and the opening it forms can be oblong, triangular or parabolic.

According to a another known change, a disk has been mounted and held between the ball-shaped member and the valve body, either on the input or output port side of the transverse bore of the ball member itself and on an axis with the fluid passages in said body, forming a V shaped opening so as to establish a well defined flow of the fluid through the valve as regards to characteristics and delivery, based on the angulations of the gland.

These known embodiments are however not without drawbacks, in the first case due to the fact that the structure of the ball-shaped member or core has to be modified and in the other cases due to the need to provide and include auxiliary elements which as such tend to have a negative influence on the cost of production of the valve.

### Objects and Summary of the Invention

Starting from these given facts, one of the objects of this invention is to provide a ball valve which, differently from the state of the techniques, does not require any additional elements or structural changes to the ball-shaped member or core to correctly set the characteristics and delivery of the fluid according to the opening/closing position of the ball-shaped member.

Another object of the invention is to provide both a two-way and three-way improved ball valve, with a system so as to be able to gradually adjust the delivery available working mechanically with the valve body, excluding or however limiting also the problems of sealing and/or leaking of ball-shaped gland and without running into the so-called water hammer problems on closing the valve.

Said objectives are achieved, according to the invention, iwith a ball valve in accordance with claim 1.

### Brief Description of the Drawings

The invention will furthermore be illustrated more in detail in the continuation of this description made in reference to the enclosed indicative and not limiting drawings, in which:
Fig. 1 is a view in perspective of a two-way ball valve with a connection for an actuator;
Figs. 2 and 3 are, respectively, a section in perspective and a longitudinal plan cross-section of only the valve body in Fig. 1;
Fig. 4 is a full longitudinal cross-section of the valve in Fig. 1;
Figs. 5, 6 and 7 are cross sections in the direction of arrows A-A in Fig. 4 of the valve respectively in the closed, partially open and fully open positions;
Figs. 8a,b,c,d,e,f each show examples of the shape that can be given to the flow adjustment opening;
Fig. 9 is a view in perspective of a three-way ball valve with a connection for an actuator;
Figs. 10 and 11 are, respectively, a section in perspective and a longitudinal plan cross-section of only the body in Fig. 9;
Fig. 12 is a full longitudinal cross-section of the valve in Fig. 9;and
Figs. 13, 14, 15 are cross-sections in the direction of arrows B-B in Fig.
12 of the valve respectively in the fully closed positions of a first input and a second input and a partial opening of the two inputs.

### Detailed Description of the Invention

As represented, a ball valve can be two- or three-way and comprises principally of a valve body 20, a ball-shaped member or core 21, and a turning stem 22 for controlling the ball-shaped member.

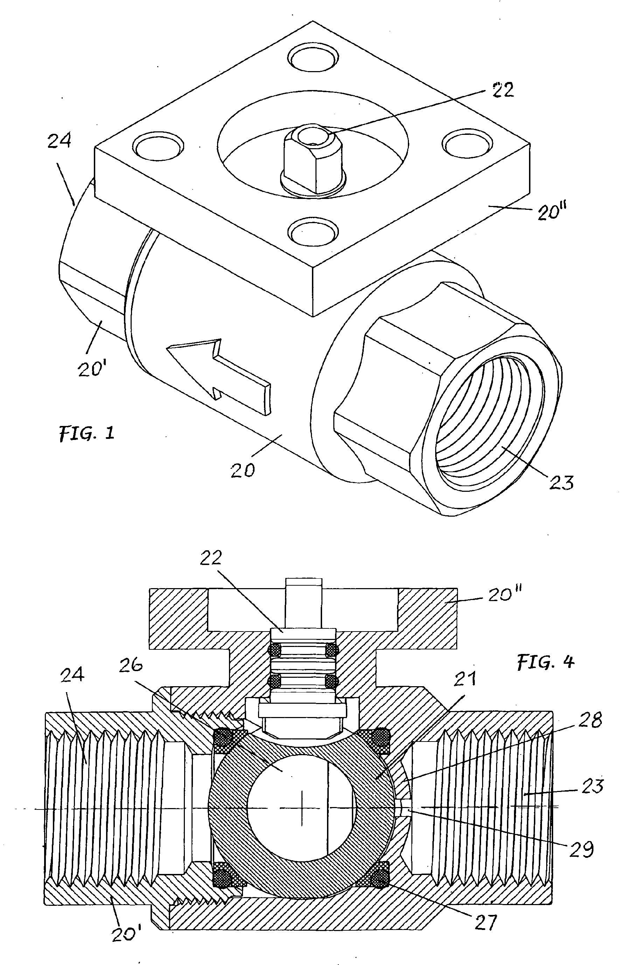

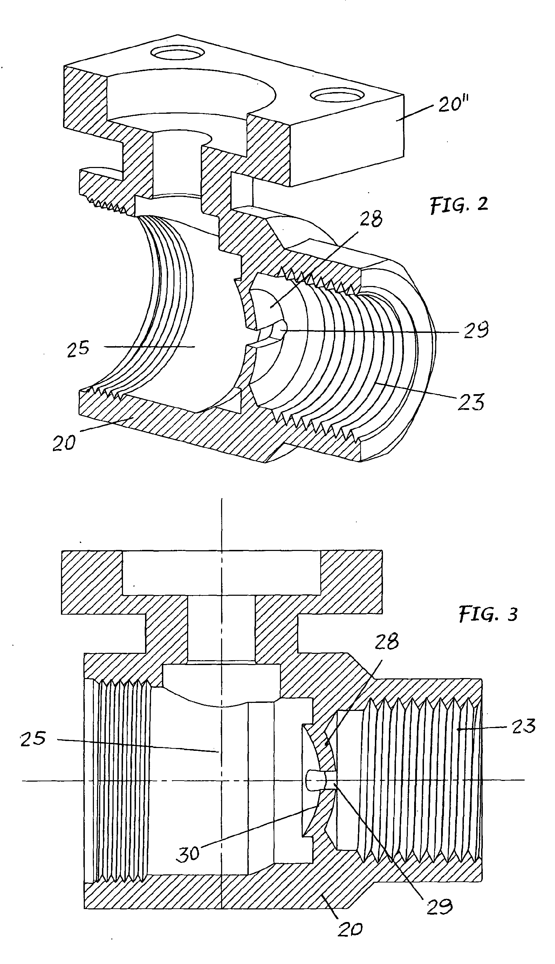

In a two-way valve - Figs. 1-7, the valve body 20 has a fluid input port 23 and an output port 24, and a valve seat 25 between said two ports. Said body may be a single piece or may have have a fitting 20' screwed on one side to establish, for example, the output port.

The ball-shaped member or core 21 has a transverse bore 26 and is positioned in said valve seat 25, held but able to turn between two lateral seals 27 on an axis with the input and output ports 23, 24.

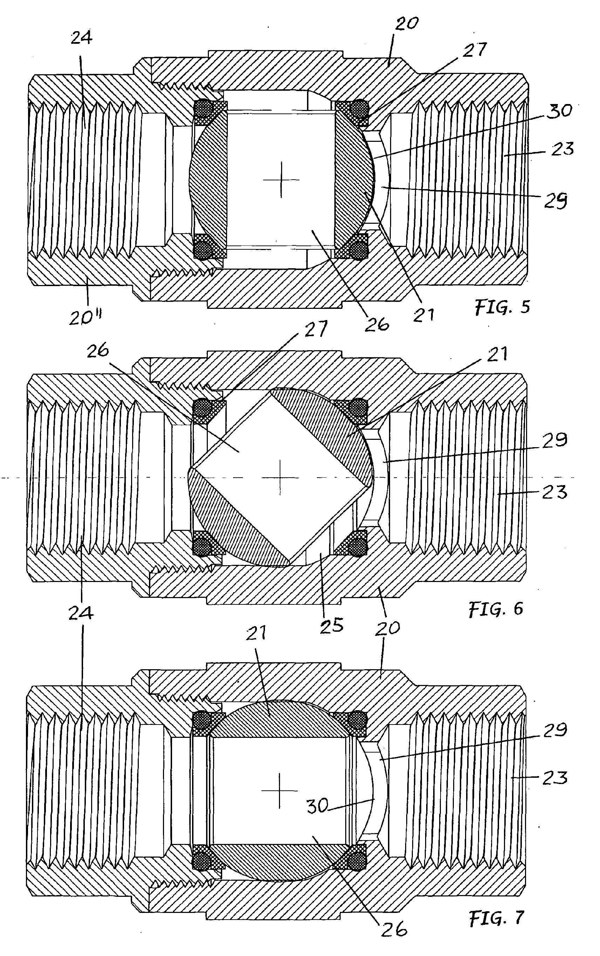

The control stem 22 is assembled and sealed, in a housing formed in the valve body 20, perpendicular to the ball-shaped member 21. One internal end of said stem engages with the member 21, whereas the other end is connected either to a manual means of control or better an actuator - not shown - which is fixed to a connection 20", integral with the valve body. A rotation, usually through 90°, of the control stem, corresponds to a similar rotation of the ball-shaped member 21 between two extreme positions, passing through intermediate positions. One extreme position corresponds to the full closing of the valve, whereby the transverse bore 26 of the ball member 21 is oriented transversely to the input and output ports of the fluid without being in communication - Figs. 4 and 5; the other extreme position corresponds to the full opening of the valve, whereby the bore 26 of the ball member is in line with input and output ports of the fluid in order to put them in direct communication - Ffig.7.

Now, in compliance with the invention, in the valve body 20, on one side or the other of the valve seat 25 housing the ball-shaped member 21 with relative lateral seals 27, in preference on the side of the fluid input port 23, is envisaged a partition baffle 28 with an differently shaped adjustment opening 29. The partition baffle 28 forms an integral part with the valve body 20 and can be machined at the same time as machining the body. It is positioned between the valve seat 25 and the adjacent port (23) in the valve body. Its internal face, the one facing towards the valve seat has a concave surface 30 which corresponds to the external surface of the ball-shaped gland, whereas its opposite external face, can be of any shape.

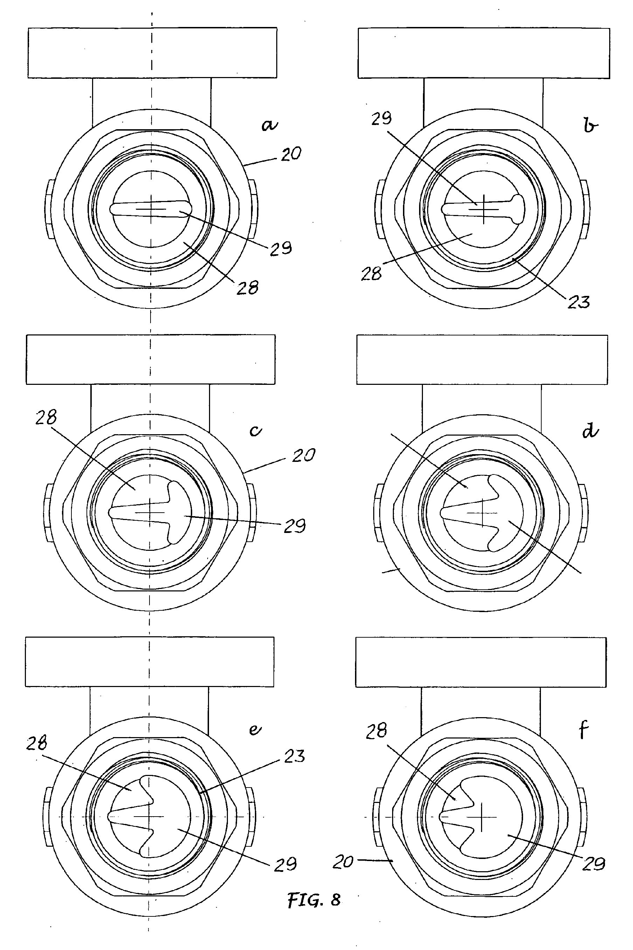

The adjustment opening 29 formed by the partition baffle 28 can be oblong, with either a fixed length or variable one from one end towards the other as shown in Figs. 8a and b. Otherwise the adjustment opening can be basically "T" shaped with a triangular median section and two side fan shaped sections of no set width as shown in Figs. 8c to 8f. The geometric axis of the adjustment opening 29 normally lies on a plane that contains the axis of the fluid passage ports 23, 24 and which is perpendicular to the rotation axis of the ball member 21. It forms the passage that places the input port in communication with the passage in the ball member and by means of this with the output port of the valve body. The arrangement, the shape and the size of the adjustment opening 29 in the partition baffle 28 are by choice and enable adjustment of the delivery of the fluid flowing through the valve from a set minimum to a set maximum, according to the variation in the degree of opening of the ball member, starting from the narrowest end up to the widest of the opening itself.

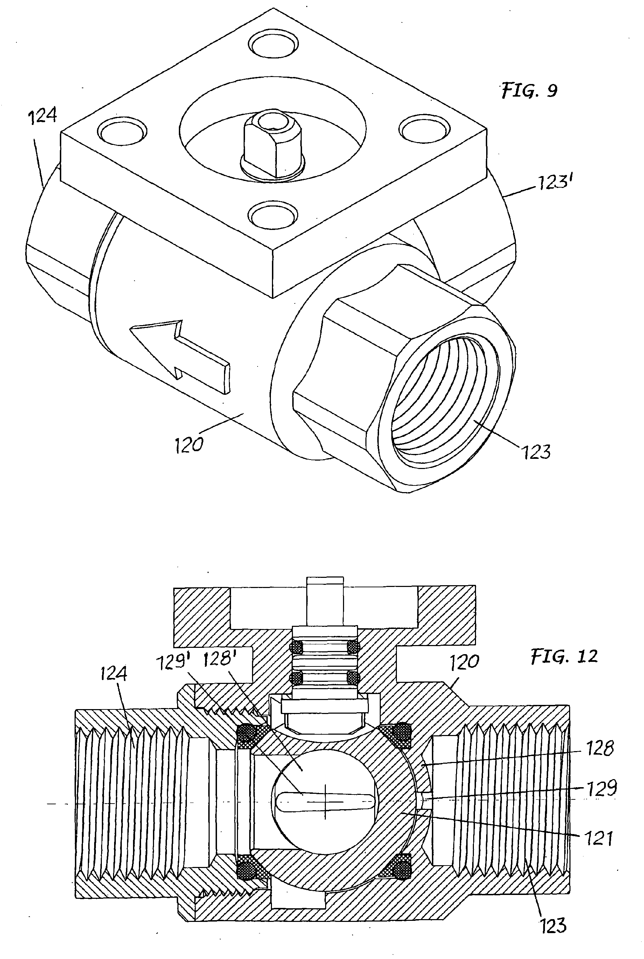

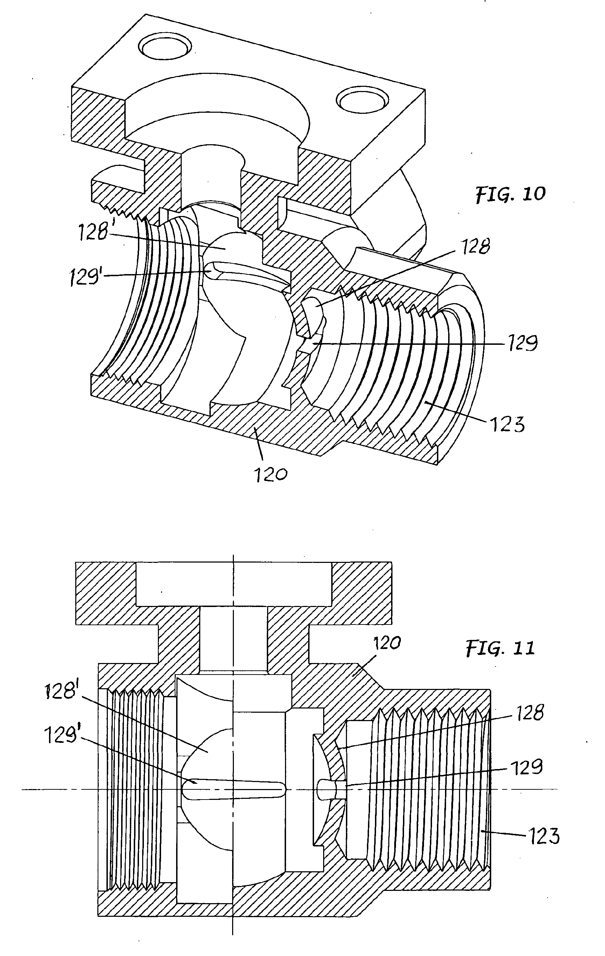

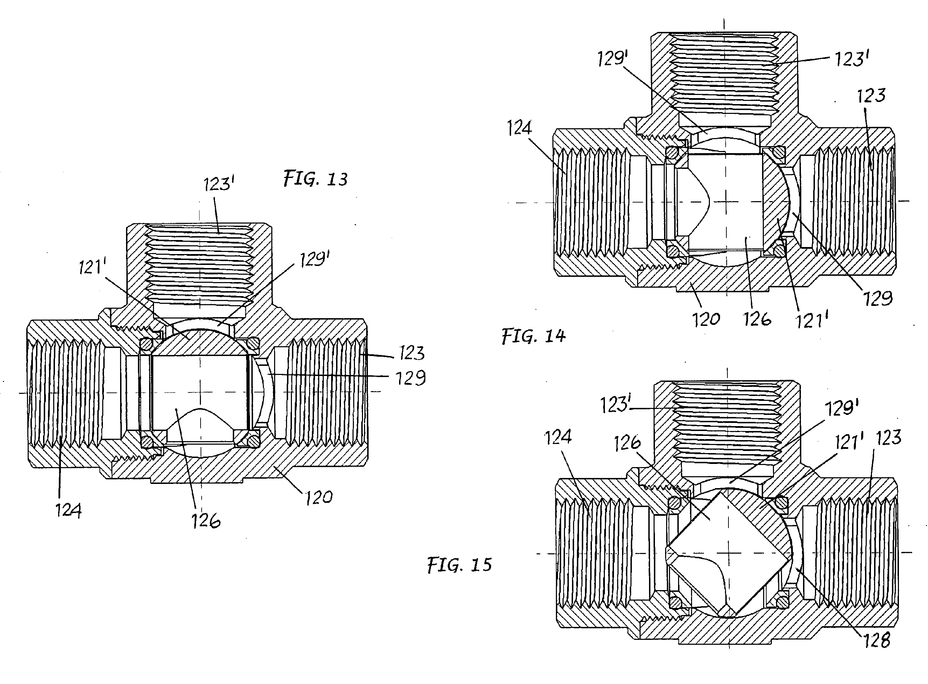

The same adjustment conditions of the delivery of the fluid are achievable in the same way in ball valves with a valve body 120 and a three-way ball-shaped member 121 operated by a respective control stem 122 as shown in Figs. 9-15 in the drawings. In this case, for example, the valve body 120 has two separate input ports 123 and 123' for two types of fluid, such as cold and hot water, and an output port 124.

The ball-shaped member 121, has a T shaped passage 126 for placing in communication as required, the one or the other or both fluid input ports 123, 123' with the output port 124. It also has a solid portion 121' for fully closing one or other of the input ports 123 leaving the other input port in communication with the output port of the valve body. In order to adjust the delivery of the flow of fluid, in correspondence with the input ports 123, 123' in the valve body and between each of the former and the ball-shaped member 121, there is a partition baffle 128, 128' integral with the body 120 and each having an opening for adjusting flow 129, 129', the shapes and dimensions of which can be analogous or equivalent to those indicated above for the two-way valve (Figs. 8a-f) and with both baffles 128, 128' identical or differing. With this arrangement, moreover, a partial opening of both input ports 123, 123' by means of the ball member, the ball valve can be used also for mixing the two input fluids in the proportions required.

## Claims

1. A ball valve for circulation of fluids in systems in which a volumetric control of the flow is required, comprising a valve body forming at least one input port and one output port of the fluid and a valve seat between said ports, a ball-shaped member positioned in said valve seat, held between lateral seals and having at least one transversal bore, and a control stem associated with the ball member to turn the latter between a closed position and a partial o full open position of the valve, **characterised in that**, on one side at least of said valve seat housing the ball-shaped member with relative lateral seals a partition baffle (28) is provided with a differently shaped adjustment opening (29), said partition baffle (28) forming an integral part of the valve body (20), the ball-shaped member interacting with the adjustment opening (29) in said partition baffle to establish a preset flow condition in any opening position of the valve.

2. Ball valve according to claim 1, wherein the valve body has a fluid input port and an output port, and the partition baffle (28) with the adjustment opening (29) is positioned between the fluid input port and the valve seat housing the ball-shaped member.

3. Ball valve according to claim 1, wherein the valve body has two fluid input ports and an output port, and in which a partition baffle (128, 128') with an adjustment opening (129, 129') is positioned between each of said input ports and the valve seat housing the ball-shaped member.

4. Ball valve according to claims 1 and 2 or 3, wherein the partition baffle (28, 128, 128') has an internal face with a concave surface (30) corresponding to the external face of the ball-shaped member, whereas its external face can be of any shape.

5. Ball valve according to any of the previous claims, wherein the adjustment opening (29, 129, 129') in the partition baffle (28, 128, 128') has an oblong shape with a uniform or variable width between one end and the other.

6. Ball valve according to claim 5, wherein the adjustment opening (29, 129, 129') in the partition baffle (28, 128, 128') is "T" shaped with a triangular median section and two lateral fan shaped sections whose widths are preset.

7. Ball valve according to claim 3, wherein the partition baffles (128, 128') in line with the input ports, each have an adjustment opening (129, 129') that is the same or different one from the other.
